# FASCICULE DE BREVET EUROPEEN

(11) **EP 2 079 801 B1**
(45) Date de publication et mention de la délivrance du brevet: **30.01.2013**
(21) Numéro de dépôt: 07858548.6
(22) Date de dépôt: 11.10.2007
(51) Int. Cl.: C08L 77/00, C08G 81/02

(54) **COMPOSITION RESISTANT AU CHOC A BASE DE RESINE POLYAMIDE ET D'UN MELANGE D'AU MOINS UN COPOLYMERE GREFFE A BLOCS POLYAMIDES ET DE POLYMERE ETHYLENIQUE BASSE DENSITE**
SCHLAGFESTE ZUSAMMENSETZUNG AUF DER BASIS EINES POLYAMIDHARZES UND EINER MISCHUNG AUS MINDESTENS EINEM PFROPFCOPOLYMER MIT POLYAMIDBLÖCKEN UND WEICHEM ETHYLENPOLYMER
IMPACT-RESISTANT COMPOSITION BASED ON A POLYAMIDE RESIN AND ON A BLEND OF AT LEAST ONE GRAFT COPOLYMER WITH POLYAMIDE BLOCKS AND A LOW-DENSITY ETHYLENE POLYMER

(30) Priorité: 12.10.2006 FR 0654250
(43) Date de publication de la demande: 22.07.2009
(73) Titulaire: ARKEMA FRANCE, 92700 Colombes (FR)
(72) Inventeur: HERT, Marius, 67680 Epfig (FR); BOUILLOUX, Alain, 27300 Saint-Leger de Rotes (FR); MONTANARI, Thibaut, 27300 Menneval (FR); FINE, Thomas, 77300 Fontainebleau (FR)
(86) Numéro de dépôt international: PCT/FR2007/052118
(87) Numéro de publication internationale: WO 2008/043958

(56) Documents cités:
- EP-A1- 1 038 921
- WO-A-02/28959
- FR-A1- 2 291 252

## Description

La présente invention concerne une composition à base de résine thermoplastique polyamide et d'un mélange d'au moins un copolymère oléfinique greffé à blocs polyamides et de polymère éthylénique basse densité, résistant au choc tout en ayant une fluidité satisfaisante.

L'amélioration des résistances aux chocs des polyamides est obtenue généralement par incorporation sous forme d'une phase dispersée d'un modifiant choc qui présente un caractère élastomérique et des fonctions réactives (acide acrylique, anhydride maléique...) susceptibles de réagir avec des groupements fonctionnels, tels que les fins de chaînes NH₂ de la matrice polyamide. Cette réactivité permet d'assurer une dispersion fine et homogène de l'élastomère en contrôlant la taille de ses particules ou nodules, une bonne adhésion à l'interface nodule matrice, et d'obtenir une augmentation de la résistance au choc optimale. Toutefois, l'inconvénient de cette technique est la viscosification du mélange, due au couplage PA-modifiant choc, qui conduit à une baisse importante de la fluidité. Cette forte évolution de la viscosité est nuisible à la mise en oeuvre de telles compositions, spécialement pour les pièces injectées fines ou de grandes dimensions ainsi qu'en extrusion.

L'art antérieur a déjà décrit de nombreuses compositions résistant au choc à base de polyamide.

EP 96 264 décrit des polyamides de viscosité relative comprise entre 2,5 et 5 renforcés par des copolymères éthylène/(méth)acrylate d'alkyle en C₂ à C₈/acide ou anhydride insaturé et comprenant 20 à 40% en poids d'acrylate.

EP 2 761 décrits des polyamides renforcés par des polyéthylènes ou des copolymères d'éthylène greffés par de l'acide (méth)acrylique, ses dérivés ou de l'anhydride maléique et éventuellement du polyéthylène.

EP 52 796 décrit des polyamides renforcés par (i) un copolymère alphaoléfine/acide carboxylique insaturé, (ii) un copolymère alphaoléfine ester d'alkyle d'acide carboxylique insaturé et (iii) un composé métallique.

FR 2 292 016 décrit des polyamides renforcés par un mélange de copolymères d'alphaoléfines et d'esters d'acides carboxyliques insaturés ou leurs dérivés.

US 5 070 145 décrit des polyamides renforcés par un mélange (i) d'un polyéthylène ou d'un copolymère éthylène/(méth)acrylate d'alkyle et (ii) d'un copolymère éthylène/(méth)acrylate d'alkyle/anhydride maléique.

US 4 174 358 décrit des polyamides renforcés se présentant sous la forme d'une matrice de polyamide dans laquelle sont dispersés des nodules dont la taille est comprise entre 0,01 et 1 µm, ayant un module compris entre 0,007 et 138 MPa, le rapport du module de la matrice PA avec celui du modifiant choc devant être au moins égale à 10. De très nombreux renforçants sont décrits, quelques-uns ayant des fonctions époxyde (mais non exemplifiés), la plupart sont des polymères ayant des fonctions acides ou anhydrides neutralisées ou sont des mélanges à base d'EPDM. Tous ces renforçants sont présentés comme équivalents.

Tout cet art antérieur n'a exemplifié que des renforçants ayant des fonctions acides ou anhydride d'acide ou des EPDM, et il n'est fait aucune mention de la viscosité des polyamides renforcés. On verra dans les exemples comparatifs de la présente invention que le comportement des modifiants de l'art antérieur n'a rien à voir avec ceux de la présente invention.

EP 802 226 de la demanderesse décrit des pièces injectées à base de résine polyamide (A) et d'une quantité d'un copolymère (B) de l'éthylène et d'un époxyde insaturé telle que leur indice de fluidité est supérieur au rapport de l'indice de fluidité du polyamide (A) sur 0,175 fois le pourcentage poids du copolymère (B).

EP 821 037 de la demanderesse décrit des compositions comprenant au moins un polyamide (A) et au moins un copolymère (B) de l'éthylène et d'au moins un anhydride d'acide (ou acide) carboxylique insaturé, dont le taux est compris entre 0.1 et 0,5 % en poids, telles que l'indice choc/fluidité (CF) des compositions comprenant 90 parties de (A) pour 10 parties de (B) est supérieur à 1,5, ces compositions ne contenant essentiellement pas de fibres de verre. Ces documents ne décrivent pas l'utilisation de modifiants choc en mélange avec des polyéthylènes basse densité.

EP 564 338 décrit des polyamides renforcés (i) par des copolymères éthylène/(méth)acrylate d'alkyle/méthacrylate de glycidyle et (ii) éventuellement par des polyéthylènes, des copolymères éthylène/(méth)acrylate d'alkyle ou des copolymères éthylène/(méth)acrylate d'alkyle/anhydride d'acide dicarboxylique insaturé. Cet art antérieur ne s'intéresse qu'à la résistance au choc et pas à la viscosité. Il est clair (d'après le tableau des exemples) qu'on a intérêt à mélanger un renforçant ayant des fonctions époxydes avec un renforçant ayant des fonctions anhydride pour provoquer une réticulation de la phase dispersée, ce qui donne de remarquables résistances au choc mais au détriment de la viscosité.

WO 94/25526 décrit une composition comprenant un mélange homogène d'au moins un polymère thermoplastique, du type polyester ou polyamide, et un copolymère de l'éthylène substantiellement linéaire, obtenu par catalyse métallocène, de densité supérieure à 0,850 g/cm³, greffé avec au moins 0,01% en poids d'un composé insaturé type anhydride maléique, Le taux de greffage optimal est entre 0.05 et 10% en poids.

Le polyéthylène linéaire contient de 95 à 50% en poids d'éthylène et de 5 à 50% en poids de comonomère en C₃ à C₂₀, en particulier du 1-octène, avec des densités allant de 0,860 à 0, 935 g/cm³. Des mélanges de PA 6,6 et du copolymère de l'éthylène greffé, à des taux compris entre 20 et 35% en poids du mélange, sont exemplifiés et permettent d'améliorer sa résistance au choc. Il n'est pas utilisé de compatibilisant supplémentaire.

US 6 303 688 décrit une composition contenant :
a) de 5 à 50% de :
   i) 10 à 70% de copolymère de l'éthylène et d'α-oléfines en C₃ à C₁₈, du type métallocène, greffé entre 0,1 et 10% par un acide carboxylique insaturé ou son anhydride,
   ii) 90 à 30% d'un copolymère élastomérique de l'éthylène et d'α-oléfines en C₃ à C₈ (en particulier un EPR, EPDM, ou SBS), et éventuellement d'un diène non conjugué,
b) de 95 à 50% d'un polymère thermoplastique tel que: PA, polyesters, polyacétales, polycarbonate ; cette composition a des propriétés de résistance au choc améliorées, par rapport au document précédent, grâce à l'utilisation comme modifiant choc d'un mélange de copolymère d'éthylène greffé et d'un élastomère non greffés. Il n'est pas utilisé de compatibilisant supplémentaire.

US 3 963 799 décrit un mélange comprenant de 60 à 90 parties de polyamide et de 40 à 10 parties de polyéthylène (dont du haute densité), dans lequel est introduit de 1,8 à 8 parties d'un copolymère greffé à blocs PA à partir d'un tronc constitué d'un copolymère d'éthylène et d'un comonomère du type anhydride maléique, qui sert de compatibilisant permettant de disperser le polyéthylène en nodules de diamètre compris entre 0,2 et 1 µm. Il n'est pas donné d'indication sur les viscosités des mélanges obtenus.

Il est décrit dans le document WO 02/28959 de la demanderesse, un copolymère greffé à blocs polyamides sur un tronc en polyoléfine qui est choisi parmi les copolymères éthylène/ anhydride maléique et éthylène/(méth)acrylate d'alkyle/anhydride maléique, formant un alliage co-continu nanostructuré, qui confère à ce copolymère des propriétés thermo-mécaniques exceptionnelles, qui sont maintenues en redispersant ce copolymère greffé dans des polyoléfines souples telles que les polymères souples de l'éthylène.

De tels mélanges trouvent des applications comme adhésifs, films, bâches, produits calandrés, câbles électriques ou poudres pour des procédés de moulage d'objets ("slush-molding").

On connaît le document EP 1038921 qui décrit une composition d'un mélange de polyamides pouvant comprendre un modifiant choc, ladite composition atant des propriétés chocs améliorées lorsque la viscosité augmente. En particulier, ce modifiant choc peut être une polyoléfine fonctionnalisée qui peut être une polyoléfine greffée par des epoxydes insaturés, des acides carboxyliques ou des anhydrides d'acide carboxylique insaturés ou un copolymère portant une des fonctions citées précédemment.

On connaît en outre le document WO 02/28959 qui décrit une composition comprenant un polymère greffé à blocs polyamide et une polyoléfine souple.

La demanderesse a découvert de manière surprenante, qu'en combinant en mélange ce type de copolymère greffé avec au moins un polymère oléfinique non réactif miscible, dans de larges proportions, on obtenait un composé modifiant choc, qui introduit dans une composition à base de polyamide, permettait d'obtenir à la fois une résistance au choc améliorée et une bonne fluidité permettant en particulier l'injection de ces compositions pour réaliser différents types de pièces, ou l'extrusion.

C'est le cas notamment pour les pièces fines ou de plus grandes dimensions ou encore de forme compliquée, ces pièces devant être produites à des cadences industrielles.

Généralement, les propriétés choc d'un polyamide sont améliorées par l'ajout d'une phase dispersée d'un modifiant choc qui contient des fonctions réactives (acide acrylique, anhydride maléique...). Le modifiant choc mis en oeuvre dans notre invention (mélange d'un copolymère greffé avec un polymère oléfinique non réactif) ne contient pas de fonctions réactives. Or, de manière surprenante, ce modifiant permet d'obtenir une composition à base de polyamide ayant d'excellentes propriétés choc, en particulier à froid. Ces propriétés à froid sont particulièrement recherchées, par exemple dans le domaine de l'automobile où les pièces extérieures en polyamide (rétroviseurs,...) doivent conserver leurs propriétés choc quelles que soient les conditions extérieures.

De plus, l'utilisation de modifiant choc entraîne généralement une forte viscosification de la composition. Or, dans le cas du modifiant choc mis en oeuvre dans notre invention, la composition reste plus fluide que pour les autres modifiants choc.

Sans vouloir être tenu par une théorie en particulier, il semble que la compatibilisation se fasse par miscibilité des greffons PA du copolymère greffé avec les chaînes PA de la matrice, l'ancrage des nodules élastomériques étant thermodynamique.

L'avantage des compositions de l'invention est le compromis entre la résistance au choc et la viscosité : ces compositions combinent un excellent comportement au choc et une plus forte fluidité des formulations à base de polyamide en comparaison des modifiants choc utilisés généralement.

Un autre avantage éventuel est qu'il est possible d'ajouter un seul produit dans la résine polyamide et non un mélange de différents produits.

Un autre avantage est qu'il suffit d'ajouter le copolymère d'éthylène greffé PA dans l'extrudeuse qui alimente le dispositif d'injection. Cet ajout peut être fait par une extrudeuse latérale ou un doseur de granulés sur l'extrudeuse de polyamide. Il n'est donc pas nécessaire de préparer à l'avance le mélange de la résine polyamide et du renforçant choc.

La présente invention concerne donc une composition à base de résine thermoplastique polyamide résistant au choc, comprenant en mélange :
- de 60 à 98 % en poids de résine polyamide (A) et
- de 2 à 40 % en poids d'un mélange d'au moins un copolymère greffé à blocs polyamides (B) constitué d'un tronc en polyoléfine et d'au moins un greffon en polyamide dans lequel les greffons sont attachés au tronc par les restes d'un monomère insaturé (X) ayant une fonction capable de réagir avec un polyamide à extrémité amine, les restes du monomère insaturé (X) étant fixés sur le tronc par greffage ou copolymérisation depuis sa double liaison, et d'un polymère éthylénique (C) non réactif miscible avec (B), la densité de (C) étant inférieure à 0,960 g/cm³.

En particulier, dans la composition selon l'invention, le pourcentage en poids du copolymère (B) dans le mélange entre les copolymères (B) et (C) est compris entre 10 et 99 %.

De préférence, le tronc en polyoléfine contenant X du copolymère (B) est choisi parmi les copolymères éthylène-anhydride maléique et éthylène - (méth)acrylate d'alkyle - anhydride maléique.

De préférence, les greffons polyamides du copolymère (B) sont du polyamide 6 monoNH₂. du polyamide 11 monoNH₂ ou du copolyamide 6/11 monoNH₂.

En particulier, ils ont une masse molaire comprise entre 1000 et 5000 g/mole et de préférence entre 2000 et 4000 g/mole.

Le copolymère (B) est avantageusement un copolymère éthylène/(méth)acrylate d'alkyle/anhydride maléique avec greffons PAmonoNH2.

De préférence, dans la composition selon l'invention, le polymère éthylénique (C) a une densité inférieure à 0,915g/cm³. De préférence encore, il est choisi parmi le polyéthylène linéaire basse densité (LLDPE), le polyéthylène très basse densité (VLDPE), le polyéthylène obtenu par catalyse métallocène (mPE), tel qu'en particulier le copolymère éthylène-1-octène, les élastomères EPR (éthylène - propylène - rubber), les élastomères EPDM (éthylène - propylène - diène), les copolymères éthylène-(méth)acrylate d'alkyle pouvant contenir jusqu'à 60% en poids de (méth)acrylate et de préférence 2 à 40%, et les copolymères éthylène-acétate de vinyle.

De préférence, ces polymères ont une densité inférieure à 0,870 g/cm³.

Différents procédés peuvent être utilisés pour réaliser cette composition :
1) addition du copolymère greffé à blocs polyamides (B) (déjà réalisé par ailleurs, comme décrit ci-après) dans la matrice de résine polyamide PA, en particulier dans une extrudeuse, puis ajout du polymère éthylénique (C),
2) introduction du copolymère greffé à blocs polyamides (B) (déjà réalisé par ailleurs), du polymère éthylénique (C) non réactif (PE par exemple) et de la résine PA, dans une extrudeuse, et compoundage du mélange,
3) fabrication du copolymère greffé à blocs polyamides (B) in situ dans le polymère éthylénique (C) non réactif (en particulier du PE), par mélange d'une polyoléfine fonctionnalisée (par exemple par de l'anhydride maléique-MAH), de PA monoNH2 et de PE en extrudeuse ; le produit de ce mélange étant alors le modifiant choc que l'on rajoute directement dans la matrice de résine PA dans un second temps.
4) fabrication du copolymère greffé à blocs polyamides (B) dans la composition de résine PA, puis ajout du polymère non réactif (C).

L'invention concerne aussi l'utilisation de ces compositions, pour la fabrication de produits ou pièces obtenus par injection ou par extrusion.

On entend par polyamide les produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylène-diamine, la nonaméthylene diamine, la décaméthylène diamine (ou 1,10-décanediamine), la dodécaméthylènediamine, la métaxylylènediamine, le bis-p aminocyclohexylméthane et la triméthylhexaméthylène diamine, avec des diacides tels que les acides isophtalique, téréphtalique, adipique, azélaïque, subérique, sébacique et dodécanedicarboxylique,
ou des mélanges de certains de ces monomères ce qui conduit à des copolyamides.

Par exemple la condensation du caprolactame et du lauryllactame produit le PA-6/12. L'invention concerne avantageusement le PA-6 (polycaprolactame), le PA-6,6 (polyhexaméthylène adipamide), le PA-11 ou poly(amino-11-undécanoamide), le PA-12 (polylauryllactame) et le PA-6/12. Elle est plus particulièrement utile pour les PA-6 et PA-6,6.

Nous allons décrire de façon plus détaillée le constituant essentiel du composé modifiant choc pour la composition à base de résine thermoplastique de polyamide, qui fait l'objet de la présente invention.

S'agissant du copolymère greffé à blocs polyamides, il peut être obtenu par réaction d'un polyamide à extrémité amine avec les restes d'un monomère insaturé X fixé par greffage ou copolymérisation sur un tronc en polyoléfine.

Ce monomère X peut être par exemple un époxyde insaturé ou un anhydride d'acide carboxylique insaturé. L'anhydride d'acide carboxylique insaturé peut être choisi par exemple parmi les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x— méthylbicyclo(2,2,1)hept-5-ène-2,2-dicarboxylique. On utilise avantageusement l'anhydride maléique. On ne sortirait pas du cadre de l'invention en remplaçant tout ou partie de l'anhydride par un acide carboxylique insaturé tel que par exemple l'acide (méth)acrylique. Des exemples d'époxydes insaturés ont été cités plus haut.

S'agissant du tronc en polyoléfine, on définit une polyoléfine comme un homo polymère ou copolymère d'alpha oléfines ou de dioléfines, telles que par exemple, éthylène, propylène, butène-1, octène-1, butadiène. A titre d'exemple, on peut citer :
- les homo polymères et copolymères du polyéthylène, en particulier LDPE, HDPE, LLDPE (linear low density polyéthylène, ou polyéthylène basse densité linéaire). VLDPE(very low density polyéthylène, ou polyéthylène très basse densité) et le polyéthylène métallocène .
- les homo polymères ou copolymères du propylène.
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle, la proportion de comonomère pouvant atteindre 40 % en poids.

Avantageusement les troncs en polyoléfine sur lesquels sont attachés les restes de X sont des polyéthylènes greffés par X ou des copolymères de l'éthylène et de X qu'on obtient par exemple par polymérisation radicalaire.

S'agissant des polyéthylènes sur lesquels on vient greffer X on entend par polyéthylène des homo- ou copolymères.

A titre de co-monomères, on peut citer :
- les alpha-oléfines, avantageusement celles ayant de 3 à 30 atomes de carbone. Des exemples ont été cités plus haut. Ces alpha-oléfines peuvent être utilisées seules ou en mélange de deux ou de plus de deux,
- les esters d'acides carboxyliques insaturés tels que par exemple les (méth)acrylates d'alkyle, les alkyles pouvant avoir jusqu'à 24 atomes de carbone, des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle,
- les esters vinyliques d'acides carboxyliques saturés tels que par exemple l'acétate ou le propionate de vinyle.
- les diènes tels que par exemple le 1,4-hexadiène.
- le polyéthylène peut comprendre plusieurs des comonomères précédents.

Avantageusement le polyéthylène qui peut être un mélange de plusieurs polymères, comprend au moins 50 % et de préférence 75 % (en moles) d'éthylène, sa densité peut être comprise entre 0,86 et 0,98 g/cm³. Le MFI (indice de viscosité à 190°C, 2,16 kg) est compris avantageusement entre 20 et 1000 g/10 min.

A titre d'exemple de polyéthylènes on peut citer :
- le polyéthylène basse densité (LDPE)
- le polyéthylène haute densité (HDPE)
- le polyéthylène linéaire basse densité (LLDPE)
- le polyéthylène très basse densité (VLDPE)
- le polyéthylène obtenu par catalyse métallocène,
- les élastomères EPR (éthylène - propylène - rubber)
- les élastomères EPDM (éthylène - propylène - diène)
- les mélanges de polyéthylène avec un EPR ou un EPDM
- les copolymères éthylène-(méth)acrylate d'alkyle pouvant contenir jusqu'à 60% en poids de (méth)acrylate et de préférence 2 à 40%.

Le greffage est une opération connue en soi.

S'agissant des copolymères de l'éthylène et de X c'est-à-dire ceux dans lesquels X n'est pas greffé, il s'agit des copolymères de l'éthylène, de X et éventuellement d'un autre monomère pouvant être choisi parmi les comonomères qu'on a cité plus haut pour les copolymères de l'éthylène destinés à être greffés.

On utilise avantageusement les copolymères éthylène-anhydride maléique et éthylène - (méth)acrylate d'alkyle - anhydride maléique. Ces copolymères comprennent de 0,2 à 10 % en poids d'anhydride maléique, de 0 à 40 % et de préférence 5 à 40 % en poids de (méth)acrylate d'alkyle. Leur MFI est compris entre 5 et 100 (mesuré à 190°C sous une pression de 2,16 kg). Les (méth)acrylates d'alkyle ont déjà été décrits plus haut. La température de fusion est comprise entre 60 et 120°C.

Avantageusement il y a en moyenne au moins deux moles de X par chaîne attachées sur le tronc en polyoléfine et de préférence de 2 à 5. L'homme de métier peut déterminer facilement par analyse IRTF le nombre de ces moles X. Par exemple si X est l'anhydride maléique et la masse moléculaire en poids M_{w} = 95 000 g/mol du tronc en polyoléfine, on a trouvé que ceci correspondait à une proportion d'anhydride d'au moins 1,5 % en poids de l'ensemble du tronc de polyoléfine contenant X et de préférence de 2,5 à 4%. Ces valeurs associées à la masse des polyamides à terminaison amine déterminent la proportion de polyamide et de tronc dans le copolymère greffé à blocs polyamides.

S'agissant du polyamide à extrémité amine on entend par polyamide les produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que le caprolactame, oenantholactame et lauryllactame ;
- d'un ou plusieurs sels ou mélanges de diamines telles l'hexaméthylène-diamine, la nonaméthylène diamine, la décaméthylène diamine (ou 1,10-décanediamine), la dodécaméthylènediamine, la métaxylylènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique :
- ou des mélanges de plusieurs monomères ce qui conduit à des copolyamides.

On peut utiliser des mélanges de polyamides. On utilise avantageusement le PA 6, le PA 11, le PA 12, le copolyamide à motifs 6 et motifs 11 (PA 6/11), le copolyamide à motifs 6 et motifs 12 (PA 6/12), et le copolyamide à base de caprolactame, hexaméthylènediamine et acide adipique (PA 6/6-6). L'avantage des copolyamides est qu'on peut ainsi choisir la température de fusion des greffons.

Le degré de polymérisation peut varier dans de larges proportions, selon sa valeur c'est un polyamide ou un oligomère de polyamide. Dans la suite du texte on utilisera indifféremment les deux expressions pour les greffons.

Pour que le polyamide ait une terminaison monoamine il suffit d'utiliser un limiteur de chaîne de formule : 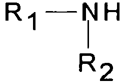 dans laquelle :
R₁ est l'hydrogène ou un groupement alkyle linéaire ou ramifié contenant jusqu'à 20 atomes de carbone,
R₂ est un groupement ayant jusqu'à 20 atomes de carbone alkyle ou alcenyle linéraire ou ramifié, un radical cycloaliphatique saturé ou non, un radical aromatique ou une combinaison des précédents. Le limiteur peut être par exemple la laurylamine ou l'oléylamine.

Avantageusement le polyamide à extrémité amine a une masse molaire comprise entre 1000 et 5000 g/mole et de préférence entre 2000 et 4000.

Les monomères amino-acides ou lactames préférés pour la synthèse de l'oligomère monoaminé selon l'invention sont choisis parmi le caprolactame, l'acide amino-11-undécanoïque ou le dodécalactame. Les limitateurs monofonctionnels de polymérisation préférés sont la laurylamine et l'oléylamine.

La polycondensation définie ci-dessus s'effectue selon les procédés habituellement connus, par exemple à une température comprise en général entre 200 et 300 °C, sous vide ou sous atmosphère inerte, avec agitation du mélange réactionnel. La longueur de chaîne moyenne de l'oligomère est déterminée par le rapport molaire initial entre le monomère polycondensable ou le lactame et le limitateur monofonctionnel de polymérisation. Pour le calcul de la longueur de chaîne moyenne, on compte habituellement une molécule de limitateur de chaîne pour une chaîne d'oligomère.

L'addition de l'oligomère monoaminé de polyamide sur le tronc de polyoléfine contenant X s'effectue par réaction d'une fonction amine de l'oligomère avec X. Avantageusement X porte une fonction anhydride ou acide, on crée ainsi des liaisons amides ou imides.

On réalise l'addition de l'oligomère à extrémité amine sur le tronc de polyoléfine contenant X de préférence à l'état fondu. On peut ainsi, dans une extrudeuse, malaxer l'oligomère et le tronc à une température généralement comprise entre 230 et 280 °C. Le temps de séjour moyen de la matière fondue dans l'extrudeuse peut être compris entre 15 secondes et 5 minutes, et de préférence entre 1 et 3 minutes. Le rendement de cette addition est évalué par extraction sélective des oligomères de polyamide libres c'est-à-dire ceux qui n'ont pas réagi pour former le copolymère greffé à blocs polyamides final.

La préparation de tels polyamides à extrémité amine ainsi que leur addition sur un tronc de polyoléfine contenant X est décrite dans les brevets US 3976720, US 3963799, US 5342886 et FR 2291225.

Les copolymères greffés à blocs polyamides utilisés dans les compositions thermoplastiques selon la présente invention sont caractérisés par une organisation nano-structurée avec des lamelles de polyamide d'épaisseur comprise entre 10 et 50 nanomètres.

Ces copolymères ont une très bonne résistance au fluage à des températures au moins égales à 80°C et pouvant aller jusqu'à 130°C, c'est à dire qu'ils ne présentent pas de rupture sous 25 kPa.

Les copolymères greffés utilisés dans l'invention peuvent être préparés par mélange à l'état fondu dans des extrudeuses (mono ou bi-vis), des malaxeurs BUSS, des mélangeurs BRABENDER et en général les dispositifs habituels de mélange des thermoplastiques et de préférence les extrudeuses bi-vis.

Ils peuvent être préparés en une étape dans une extrudeuse. Dans les premières zones on introduit le tronc contenant X (par exemple un copolymère éthylène-(meth)acrylate d'alkyle-anhydride maléique), le polyamide à extrémité amine puis quelques zones plus loin les additifs. On peut aussi introduire tous les ingrédients dans la première zone de l'extrudeuse.

S'agissant du polymère éthylénique (C), il s'agit avantageusement de polyéthylène qui peut être un mélange de plusieurs polymères, et comprend au moins 50 % et de préférence 75 % (en moles) d'éthylène, sa densité est inférieure à 0,960 g/cm³, et de préférence comprise entre 0,850 et 0,915 g/ cm³. Le MFI (indice de viscosité à 190°C, 2,16 kg) est compris avantageusement entre 1 et 1000 g/10 min.

A titre d'exemple de polyéthylènes on peut citer :
- le polyéthylène basse densité (LDPE)
- le polyéthylène linéaire basse densité (LLDPE)
- le polyéthylène très basse densité (VLDPE)
- le polyéthylène obtenu par catalyse métallocène (mPE), tel qu'en particulier le copolymère éthylène-1-octène
- les élastomères EPR (éthylène - propylène - rubber)
- les élastomères EPDM (éthylène - propylène - diène)
- les mélanges de polyéthylène avec un EPR ou un EPDM
- les copolymères éthylène-(méth)acrylate d'alkyle pouvant contenir jusqu'à 60% en poids de (méth)acrylate et de préférence 2 à 40%, les alkyles pouvant avoir jusqu'à 24 atomes de carbone, des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle,
- les copolymères éthylène-acétate de vinyle ou le propionate de vinyle.

De préférence, on utilisera des polyéthylènes de très basse densité, en particulier comprise entre 0,850 et 0,870 g/cm³.

Les compositions thermoplastiques utilisées selon l'invention peuvent comprendre aussi des agents fluidifiants tels que de la silice, de l'éthylène-bis -amide, du stéarate de calcium ou du stéarate de magnésium. Elles peuvent aussi comprendre des agents stabilisants thermiques, des antioxydants, des anti U.V., des charges minérales et des pigments de coloration.

### DESCRIPTION D'EXEMPLES DE REALISATION DU COPOLYMERE GREFFE (B) DE L'INVENTION :

Quatre compositions thermoplastiques A1, B1, C1 ef D1 se présentant sous forme d'alliage co-continu nanostructuré sont réalisées à partir des composants suivants dont les teneurs en parties en poids sont présentées dans le tableau 1 ci-dessous:

**TABLEAU 1 :**

| | **A1** | **B1** | **C1** | **D1** |
|---|---|---|---|---|
| LOTADER 4700 | 80 | | | |
| LOTADER 7500 | | 80 | | |
| LOTADER 3210 | | | 80 | |
| LOTADER 3410 | | | | 80 |
| PA 6 mono NH2 | 19 | 19 | 19 | 19,6 |
| Irgafos 168 | 0,5 | 0,5 | 0,5 | 0,2 |
| Irganox 1098 | 0,5 | 0,5 | 0,5 | 0,2 |

Le Lotader 4700^{®} de ARKEMA est un terpolymère éthylène-acrylate d'éthyle (29% en poids)-anhydride maléique (1,5% poids), ayant un MFI de 7 (g/10 min mesuré à 190°C sous une charge de 2,16kg), selon la norme ASTM D 1238).

Le Lotader 7500^{®} de ARKEMA est un terpolymère éthylène-acrylate d'éthyle (17,5% en poids)-anhydride maléique (2,9% poids), ayant un MFI de 70.

Le Lotader 3210^{®} de ARKEMA est un terpolymère éthylène-acrylate de butyle (6% en poids)-anhydride maléique (3% poids), ayant un MFI de 5.

Le Lotader 3410 de ARKEMA est un terpolymère éthylène-acrylate de butyle (18% en poids)-anhydride maléique (3% poids), ayant un MFI de 5.

Le PA 6 mono NH2 a une masse moléculaire de 2500 g/mole,

Irganox 1098 est un anti-oxydant de CIBA,

Irgafos 168 est un agent stabilisant de CIBA.

Ces composants sont introduits dans une extrudeuse bi-vis co-rotative de type LEISTRITZ^{®} LSM 306-34, ayant un profil de températures compris entre 240 et 280°C, le produit obtenu étant mis en sac après granulation.

### * EXEMPLES *

Réalisation des essais : mélange du PA-6, du copolymère greffé (B) et du PE basse densité par compoundage.

Les compositions sont obtenues par compoundage sur une extrudeuse double vis WERNER 30, L/D 30 munie d'un système de dégazage et d'une coupe à jonc, avec un débit de 20 kg/h et une vitesse de 200 tours/min. Les profils de températures utilisés sont les suivants : 270/270/270/270/270/270°C

Les composants en granulés sont mélangés à sec puis introduits dans la trémie d'alimentation.

### Moulage des échantillons :

Les granulés sont séchés sous pression réduite à une température de 80°C puis sont moulés par injection sur une presse à injecter type Krauss Maffei B1 (60 T de fermeture) dans les conditions suivantes :
Température matière 240 - 260°C, moule 40°C- Pression d'injection 1100bars

Les éprouvettes normalisées (80 x 10 x 4 mm³) ainsi obtenues sont conditionnées pendant 14 jours à 23°C et 50% d'humidité relative.

### Evaluation :

- Pression en tête de l'extrudeuse (Ptête) : cette valeur exprimée en bar, donne une indication de la viscosité en fondu du compound, si la pression est basse il en est de même de la viscosité.
- Résistance aux chocs sur des éprouvettes préalablement entaillées du type CHARPY selon la norme ISO 179-82, à différentes températures (23°C, et -40°C).
- Indice de fluidité MFI selon la norme ISO 1133 sous un poids de 2,16 kg et à une température de 235°C pour les compositions à base de PA 6.

### Matières premières :

Les polyamides testés sont des polyamides PA 6 commercialisés par la société Domamid sous la référence Domo 27.

Le copolymère greffé (B) selon l'invention est la composition D1 ci-dessus.

Les polymères éthyléniques testés sont :
Exxelor VA 1801® commercialisé par Exxon : élastomère ethylène-propylène (EPR) greffé MAH (anhydride maléique), de densité d= 0,87 g/cm³.
Exxelor VA 1803^{®} commercialisé par Exxon : copolymère éthylène-propylène greffé MAH (anhydride maléique), de densité d= 0,86 g/cm³.
Exxelor VA 1840^{®} commercialisé par Exxon : copolymère éthylène-octène greffé MAH (anhydride maléique), de densité d= 0,88 g/cm³.
Fusabond MN493D^{®} commercialisé par Du Pont : copolymère éthylène-octène greffé MAH (anhydride maléique), de densité d= 0,87 g/cm³.
Engage 8200^{®} commercialisé par Dow-DuPont : polyéthylène métallocène, de densité d= 0,87 g/cm³.
Autre modifiant choc testé : Lotader 3410^{®} de ARKEMA qui est un terpolymère éthylène-acrylate de butyle (18% en poids)-anhydride maléique (3% poids), ayant un MFI de 5.

### Résultats d'essais :

Les résultats obtenus avec les différentes compositions sur la base d'une résine PA-6 (80% en poids du mélange) sont regroupés dans le tableau 2 (les exemples 1 à 5, 7 et 8 étant comparatifs).

**TABLEAU 2**

| **ESSAI** | **1** | **2** | **3** | **4** | **5** | **6** | **7** | **8** |
|---|---|---|---|---|---|---|---|---|
| **Modifiant choc** | 20% VA1801 | 20% VA1803 | 20% VA1840 | 20% Fusabond MN493D | 6% Lotader 3410 14% Engage 8200 | 6% compos. D1 14% Engage 8200 | 20% Lotader 3410 | 20% Lotader 4700 |
| **P tête (bar)** | 17 | 14 | 15 | 17 | 15 | 14 | 20 | 15 |
| **MFI (235°C, 2.16kg)** | 5,4 | 7,1 | 6,5 | 5,8 | 5,3 | 8,7 | 1,5 | 5 |
| **Choc Charpy entaillé à 23°C (kJ/m²)** | 84 | 88 | 87 | 99 | 85 | 78 | 33 | 47 |
| **Choc Charpy entaillé à -40°C (kJ/m²)** | 14,8 | 22 | 17,6 | 25 | 17 | 25 | 10.5 | 10 |

On constate que ces compositions à base de PA-6 et du mélange du copolymère greffé à blocs polyamides et du polyéthylène basse densité présentent un compromis résistance aux chocs / fluidité nettement amélioré par rapport aux autres modifiants choc, à froid, en particulier à -40°C.

Ceci est d'autant plus surprenant que le modifiant choc utilisé pour notre invention ne contient pas de fonctions réactives. Or ce sont celles-ci qui permettent généralement les bonnes propriétés au choc. En comparant les exemples du tableau 2, on remarque que le mélange de notre invention (essai 6) permet d'obtenir des propriétés choc à 23°C équivalentes aux compositions polyamide modifiées choc généralement utilisées. A froid, le modifiant choc mis en oeuvre dans notre invention est même plus efficace dans le polyamide que ceux utilisés généralement (+47% au choc Charpy entaillé à -40°C par rapport à la composition de l'essai 5 réactive équivalente).

De plus, la combinaison polyamide modifiant choc de notre invention a une fluidité plus importante que les autres formulations polyamide résistantes au choc (MFI plus élevé et Ptête inférieure).

## Revendications

1. Composition à base de résine thermoplastique polyamide résistant au choc, comprenant en mélange :
- de 60 à 98 % en poids de résine polyamide (A) et
- de 2 à 40 % en poids d'un mélange d'au moins un copolymère greffé à blocs polyamides (B) constitué d'un tronc en polyoléfine et d'au moins un greffon en polyamide dans lequel les greffons sont attachés au tronc par les restes d'un monomère insaturé (X) ayant une fonction capable de réagir avec un polyamide à extrémité amine, les restes du monomère insaturé (X) étant fixés sur le tronc par greffage ou copolymérisation depuis sa double liaison, et d'un polymère éthylénique non réactif (C) miscible avec (B) et de densité inférieure à 0,960 g/cm³.

2. Composition selon la revendication 1, **caractérisée en ce que** le polymère éthylénique non réactif (C) a une densité inférieure à 0,915 g/cm³.

3. Composition selon la revendication 1 ou 2, **caractérisée en ce que** le pourcentage en poids du copolymère (B) dans le mélange entre les copolymères (B) et (C) est compris entre 10 et 99 %.

4. Composition selon l'une des revendications 1 à 3, **caractérisée en ce que** le tronc en polyoléfine contenant X du copolymère (B) est choisi parmi les copolymères éthylène-anhydride maléique et éthylène - (méth)acrylate d'alkyle - anhydride maléique.

5. Composition selon l'une des revendications 1 à 4, **caractérisée en ce que** les greffons polyamides du copolymère (B) sont du polyamide 6 monoNH₂, du polyamide 11 monoNH₂ ou du copolyamide 6/11 monoNH₂.

6. Composition selon la revendication 5, **caractérisée en ce que** les greffons polyamides ont une masse molaire comprise entre 1000 et 5000 g/mole et de préférence entre 2000 et 4000.

7. Composition selon l'une quelconque des revendications précédentes, **caractérisée en ce que** le polymère éthylénique (C) est choisi parmi le polyéthylène linéaire basse densité (LLDPE), le polyéthylène très basse densité (VLDPE), le polyéthylène obtenu par catalyse métallocène (mPE), le copolymère éthylène-1-octène, les élastomères éthylène - propylène - rubber (EPR), les élastomères éthylène - propylène - diène (EPDM), les copolymères éthylène-(méth)acrylate d'alkyle pouvant contenir jusqu'à 60% en poids de (méth)acrylate et de préférence 2 à 40%, les copolymères éthylène-acétate de vinyle, ou un mélange d'au moins deux de ces polymères.

8. Composition selon la revendication 7, **caractérisée en ce que** le polymère éthylénique (C) a une densité comprise entre 0,850 et 0,870 g/cm³.

9. Procédé d'obtention de la composition selon l'une des revendications précédentes, caractérisé en qu'il comprend :
- une étape de fabrication du copolymère greffé à blocs polyamides (B), par extrusion réactive à partir d'un polymère choisi parmi les copolymères éthylène-anhydride maléique et éthylène - (méth)acrylate d'alkyle - anhydride maléique, et du polyamide mono NH2,
- une étape d'introduction dudit copolymère (B), de la résine polyamide PA, et du polymère éthylénique (C) et de mélange par extrusion.

10. Utilisation de la composition selon l'une quelconque des revendications 1 à 8, pour la fabrication de produits ou pièces obtenus par injection ou par extrusion.

## Claims

1. Composition based on an impact-resistant polyamide thermoplastic resin, comprising, as a blend:
- from 60 to 98% by weight of polyamide resin (A) and
- from 2 to 40% by weight of a blend of at least one polyamide-block graft copolymer (B) composed of a polyolefin backbone and of at least one polyamide graft in which the grafts are attached to the backbone by the residues of an unsaturated monomer (X) having a functional group capable of reacting with an amine-terminated polyamide, the residues of the unsaturated monomer (X) being attached to the backbone by grafting or copolymerization via its double bond, and of a non-reactive ethylenic polymer (C) that is miscible with (B) and 3 has a density of less than 0,960 g/cm³.

2. Composition according to claim 1, wherein the non-reactive ethylenic polymer (C) has a 3 density less than 0,915 g/cm³.

3. Composition according to claim 1 or 2, wherein the percentage by weight of the copolymer (B) in the blend between the copolymers (B) and (C) is between 10 and 99%.

4. Composition according to one of the claims 1 to 3, wherein the polyolefin backbone containing X of the copolymer (B) is chosen from ethylene/maleic anhydride and ethylene/alkyl (meth)acrylate/maleic anhydride copolymers.

5. Composition according to one of the claims 1 to 4, wherein the polyamide grafts of the copolymer (B) are mono-NH₂ -terminated PA-6 polyamide or mono-NH₂-terminated PA-11 polyamide or mono-NH₂ -terminated PA-6/11 copolyamide.

6. Composition according to claim 5, wherein the polyamide grafts have a molar mass between 1000 and 5000 g/mol and preferably between 2000 and 4000 g/mol.

7. Composition according to any one of the preceding claims, wherein the ethylenic polymer (C) is chosen from linear low density polyethylene (LLDPE), very low density polyethylene (VLDPE), polyethylene obtained by metallocene catalysis (mPE), the ethylene/1-octene copolymer, ethylene-propylene-rubber (EPR) elastomers, ethylene-propylene-diene monomer (EPDM) elastomers, ethylene/alkyl (meth)acrylate copolymers possibly containing up to 60% by weight of (meth)acrylate and preferably 2 to 40%, ethylene/vinylacetate copolymers, or a blend of at least two of these polymers.

8. Composition according to claim 7, wherein the ethylenic polymer (C) has a density 3 between 0,850 and 0,870 g/cm³.

9. Method of obtaining a composition according to any one of the preceding claims, **characterized in that** it comprises the steps of:
- manufacturing a polyamide-block graft copolymer (B), by reactive extrusion starting from a polymer chosen from ethylene/maleic anhydride and ethylene/alkyl (meth)acrylate/maleic anhydride copolymers, and from mono NH₂-terminated polyamide; and
- introducing said copolymer (B), the polyamide PA resin, and the ethylenic polymer (C) and of blending by extrusion.

10. Use of the composition according to any one of the claims 1 to 8, for manufacturing products or articles obtained through injection or extrusion.

## Patentansprüche

1. Zusammensetzung auf der Basis eines schlagfesten thermoplastischen Polyamidharzes, die im Gemisch enthält:
- 60 bis 98 Gew.-% Polyamidharz (A) und
- 2 bis 40 Gew.-% eines Gemisches mindestens eines gepfropften Copolymers mit Polyamidblöcken (B), das aus einem Polyolefin-Grundgerüst und mindestens einem Polyamid-Pfropfzweig gebildet ist, bei dem die Pfropfzweige über Reste eines ungesättigten Monomers (X), das eine Funktion aufweist, die befähigt ist, mit einem Polyamid mit einer endständigen Aminogruppe zu reagieren, an das Grundgerüst gebunden sind und die Reste des ungesättigten Monomers (X) durch Pfropfung oder Copolymerisation an dem Grundgerüst über seine Doppelbindung fixiert sind, und eines mit (B) mischbaren, unreaktiven ethylenischen Polymers (C) mit einer Dichte unter 0,960 g/cm³.

2. Zusammensetzung nach Anspruch 1, **dadurch gekennzeichnet, dass** das unreaktive ethylenische Polymer (C) eine Dichte unter 0,915 g/cm³ aufweist.

3. Zusammensetzung nach Anspruch 1 oder 2, **dadurch gekennzeichnet, dass** der auf das Gewicht bezogene prozentuale Anteil des Copolymers (B) in dem Gemisch der Copolymere (B) und (C) zwischen 10 und 99 % liegt.

4. Zusammensetzung nach einem der Ansprüche 1 bis 3, **dadurch gekennzeichnet, dass** das X-enthaltende Polyolefin-Grundgerüst des Copolymers (B) unter den Ethylen/Maleinsäureanhydrid-Copolymeren und Ethylen/Alkyl(meth)crylat/Maleinsäureanhydrid-Copolymeren ausgewählt ist.

5. Zusammensetzung nach einem der Ansprüche 1 bis 4, **dadurch gekennzeichnet, dass** es sich bei den Polyamid-Pfropfzweigen des Copolymers (B) um Mono-NH₂-Polyamid 6, Mono-NH₂-Polyamid 11 oder Mono-NH₂-Copolyamid 6/11 handelt.

6. Zusammensetzung nach Anspruch 5, **dadurch gekennzeichnet, dass** die Polyamid-Pfropfzweig eine Molmasse zwischen 1000 und 5000 g/mol und vorzugsweise zwischen 2000 und 4000 g/mol aufweisen.

7. Zusammensetzung nach einem der vorhergehenden Ansprüche, **dadurch gekennzeichnet, dass** das ethylenische Polymer (C) unter dem linearen Polyethylen mit niedriger Dichte (LLDPE), dem Polyethylen mit sehr niedriger Dichte (VLDPE), dem durch Metallocen-Katalyse hergestellten Polyethylen (mPE), dem Ethylen/1-Octen-Copolymer, den Ethylen-Propylen-Kautschuk-Elastomeren (EPR), den Ethylen-Propylen-Dien-Elastomeren (EPDM), den Ethylen/Alkyl(meth)acrylat-Copolymeren, die bis zu 60 Gew.-% und vorzugsweise 2 bis 40 % (Meth)acrylat enthalten können, den Ethylen/Vinylacetat-Copolymeren oder einem Gemisch aus zumindest zwei dieser Polymere ausgewählt ist.

8. Zusammensetzung nach Anspruch 7, **dadurch gekennzeichnet, dass** das ethylenische Polymer (C) eine Dichte zwischen 0,850 und 0,870 g/cm³ aufweist.

9. Verfahren zur Herstellung der Zusammensetzung nach einem der vorhergehenden Ansprüche, **dadurch gekennzeichnet, dass** es umfasst:
- einen Schritt der Herstellung eines mit Polyamidblöcken gepfropften Copolymers (B) durch reaktive Extrusion ausgehend von einem Polymer, das unter den Ethylen/Maleinsäureanhydrid-Copolymeren und Ethylen/Alkyl(meth)crylat/Maleinsäureanhydrid-Copolymeren ausgewählt ist, und einem Mono-NH₂-Polyamid,
- einen Schritt des Einbringens des Copolymers (B), Polyamidharzes PA und ethylenischen Polymers (C) und Vermischens durch Extrusion.

10. Verwendung der Zusammensetzung nach einem der Ansprüche 1 bis 8 für die Herstellung von Produkten oder Werkstücken, die durch Spritzgießen oder Extrusion hergestellt werden.
